# EUROPEAN PATENT APPLICATION

(11) **EP 4 328 276 A1**
(43) Date of publication of application: **28.02.2024**
(21) Application number: 22807270.8
(22) Date of filing: 30.03.2022
(51) Int. Cl.: C09D 5/16, C09D 133/14, C09D 143/04, C09D 167/00, C09D 7/61, C09D 7/63

(54) **ANTIFOULING COATING COMPOSITION**

(30) Priority: 12.05.2021 JP 2021081265
(71) Applicant: Nitto Kasei Co., Ltd., Osaka-shi Osaka 533-0031 (JP)
(72) Inventor: OKA, Nagato, Osaka-shi, Osaka 533-0031 (JP); KITAMURA, Hitoshi, Osaka-shi, Osaka 533-0031 (JP); WAKU, Hidenori, Osaka-shi, Osaka 533-0031 (JP); MATSUKI, Takashi, Osaka-shi, Osaka 533-0031 (JP); YASUI, Takuya, Osaka-shi, Osaka 533-0031 (JP)
(74) Representative: Gulde & Partner
(86) International application number: PCT/JP2022/016329
(87) International publication number: WO 2022/239566

(57) **Abstract**

The present invention provides an antifouling coating composition capable of maintaining a stable coating film dissolution rate in seawater over a long period of time, and capable of maintaining stable antifouling performance without causing coating film defects such as cracks.

According to the present invention, there is provided an antifouling coating composition comprising a copolymer A, a polyester resin C, and an antifouling agent D, wherein the copolymer A is a copolymer of a monomer (a) represented by general formula (1) and an ethylenically unsaturated monomer (b) other than the monomer (a), and the monomer (a) comprises a compound represented by the general formula (1) in which n is 2 or more.

## Description

### Technical Field

The present invention relates to an antifouling coating composition.

### Background Art

Aquatic fouling organisms such as barnacles, tubeworms, common mussels, *Bugula neritina,* sea squirts, green laver, sea lettuce, and slimes adhere to ships (especially, on the bottom of ships), fishing tools such as fishing nets and fishing net accessories, and underwater structures such as power plant aqueducts, thereby causing problems such as impaired functionality and appearance of the ships and the like.

In order to prevent such problems, there are known techniques in which an antifouling coating composition is applied onto a ship or the like to form an antifouling coating film such that an antifouling agent is gradually released from the antifouling coating film, which allows antifouling performance to be exhibited over a long period of time (Patent Literatures 1 to 4).

However, the antifouling coating films comprising (meth)acrylic acid alkoxycarbonylmethyl ester group-containing polymer disclosed in Patent Literatures 1 to 4 are difficult to exhibit antifouling property over a long period of time due to its extremely low coating film dissolubility. In order to solve these problems, there has been proposed a technique for dissolving and allowing the coating film to exhibit antifouling performance over a long period of time (Patent Literature 5).

### Citation List

### Patent Literature

[Patent Literature 1] JP-B-S63-61989
[Patent Literature 2] JP-A-2003-119420
[Patent Literature 3] JP-A-2003-119419
[Patent Literature 4] JP-A-2002-3776
[Patent Literature 5] WO2020/045211

### Summary of Invention

### Technical Problem

Although the antifouling coating film comprising the antifouling coating composition disclosed in Patent Literature 5 has improved coating film dissolubility and the like, there is room for further improvement in terms of coating film dissolubility and coating film defects such as cracks, which may occur when a long period of time has elapsed after immersion in seawater.

The present invention has been made in view of such circumstances, and provides an antifouling coating composition capable of maintaining a stable coating film dissolution rate in seawater over a long period of time, and capable of maintaining stable antifouling performance without causing coating film defects such as cracks.

### Solution to Problem

According to the present invention, there is provided an antifouling coating composition comprising a copolymer A, a polyester resin C, and an antifouling agent D, wherein the copolymer A is a copolymer of a monomer (a) represented by general formula (1) and an ethylenically unsaturated monomer (b) other than the monomer (a), and the monomer (a) comprises a compound represented by the general formula (1) in which n is 2 or more.

As a result of diligent research to solve the above problems, the present inventors have found that the composition comprising the copolymer A, a polyester resin C, and the antifouling agent D can solve the above problems and have completed the present invention.

### Description of Embodiments

The present invention will be described in detail below.

### 1. Antifouling Coating Composition

An antifouling coating composition of the present invention contains a copolymer A, a polyester resin C, and an antifouling agent D.

### 1-1. Copolymer A

The copolymer A is a copolymer of a monomer (a) and an ethylenically unsaturated monomer (b) other than the monomer (a), and contains monomer units derived from the monomer (a) and the monomer (b). The content of the monomer (a) with respect to the total of the monomer (a) and the monomer (b) is preferably 10 to 90% by mass, and still more preferably 20 to 70% by mass. Specifically, the content thereof is, for example, 10, 15, 20, 25, 30, 35, 40, 45, 50, 55, 60, 65, 70, 75, 80, 85, or 90% by mass, and may be within the range between any two numerical values exemplified here. In this case, the coating film dissolubility is particularly good.

### 1-1-1. Monomer (a)

The monomer (a) is represented by general formula (1).

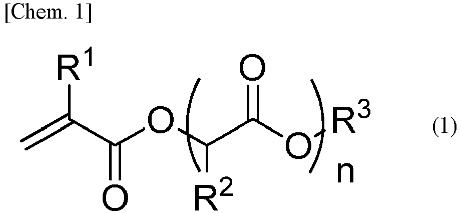

In the formula, R¹ represents hydrogen or a methyl group, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 1 to 10.

R² is preferably hydrogen or a methyl group.

The number of carbon atoms in the alkoxy group or alkyl group of R³ is, for example, 1, 2, 3, 4, 5, 6, 7, or 8, and may be within the range between any two numerical values exemplified here. R³ is, for example, a methyl group, an ethyl group, a n-propyl group, an isopropyl group, a n-butyl group, a t-butyl group, a 2-ethylhexyl group, a cyclohexyl group, a benzyl group, a phenyl group, a 2-methoxyethyl group, a 4-methoxybutyl group, a vinyl group, or an allyl group, and is preferably a methyl group, an ethyl group, an isopropyl group, or a n-butyl group.

n represents an integer of 1 to 10, and n is, for example, 1, 2, 3, 4, 5, 6, 7, 8, 9, or 10, and may be within the range between any two numerical values exemplified here.

The monomer (a) contains a compound represented by general formula (1) in which n is 2 or more. When the compound in which n is 2 or more is contained as the monomer (a), the coating film dissolubility is increased. The monomer (a) may only be constituted by a compound in which n is 2 or more, or may be a mixture of a compound in which n is 1 and a compound in which n is 2 or more.

The monomer (a) is preferably constituted by a monomer (a1) and a monomer (a2). The content of the monomer (a1) in the monomer (a) is preferably 50 to 80% by mass, still more preferably 55 to 75% by mass, and particularly preferably 60 to 70% by mass. The monomer (a1) has the property of increasing the coating film strength and decreasing the coating film dissolubility as compared with the monomer (a2). Therefore, when the content of the monomer (a1) is too small, the strength of the coating film tends to decrease, and the coating film surface condition may deteriorate after a long period of time. On the other hand, when the content of the monomer (a1) is too large, the coating film dissolubility decreases, and the antifouling performance may deteriorate.

### <Monomer (a1)>

The monomer (a1) is a compound represented by general formula (1) in which n is 1.

Examples of the monomer (a1) include methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, t-butoxycarbonylmethyl (meth)acrylate, 2-ethylhexyloxycarbonylmethyl (meth)acrylate, cyclohexyloxycarbonylmethyl (meth)acrylate, benzyloxycarbonylmethyl (meth)acrylate, phenoxycarbonylmethyl (meth)acrylate, 2-methoxyethoxycarbonylmethyl (meth)acrylate, 4-methoxybutoxycarbonylmethyl (meth)acrylate, allyloxycarbonylmethyl (meth)acrylate, vinyloxycarbonylmethyl (meth)acrylate, 1-(methoxycarbonyl)ethyl (meth)acrylate, 1-(ethoxycarbonyl)ethyl (meth)acrylate, 1-(n-propoxycarbonyl)ethyl (meth)acrylate, 1-(isopropoxycarbonyl)ethyl (meth)acrylate, 1-(n-butoxycarbonyl)ethyl (meth)acrylate, 1-(t-butoxycarbonyl)ethyl (meth)acrylate,α-(methoxycarbonyl)benzyl (meth)acrylate, and α-(ethoxycarbonyl)benzyl (meth)acrylate, and preferred examples thereof include methoxycarbonylmethyl (meth)acrylate, ethoxycarbonylmethyl (meth)acrylate, isopropoxycarbonylmethyl (meth)acrylate, n-butoxycarbonylmethyl (meth)acrylate, 1-(methoxycarbonyl)ethyl (meth)acrylate, and 1-(ethoxycarbonyl)ethyl (meth)acrylate.

### <Monomer (a2)>

The monomer (a2) is a compound represented by general formula (1) in which n is 2 or more. n in general formula (1) is preferably 2 to 6 from the viewpoint of long-term antifouling property.

The monomer (a2) preferably contains both a compound in which n is 2 and a compound in which n is 3 or more. Specifically, the mass ratio (n(2)/n(2 to 10)) in terms of solid content is preferably, for example, 0.4 to 0.8, and still more preferably 0.5 to 0.7. In this case, stable dissolution of the coating film tends to continue. Specifically, the value is, for example, 0.40, 0.45, 0.50, 0.55, 0.60, 0.65, 0.70, 0.75, or 0.80, and may be within the range between any two numerical values exemplified here.

Examples of the monomer (a2) include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di(oxycarbonylmethyl) t-butyl (meth)acrylate, di(oxycarbonylmethyl) 2-ethylhexyl (meth)acrylate, di(oxycarbonylmethyl) cyclohexyl (meth)acrylate, di(oxycarbonylmethyl) benzyl (meth)acrylate, di(oxycarbonylmethyl) phenyl (meth)acrylate, di(oxycarbonylmethyl) 2-methoxyethyl (meth)acrylate, di(oxycarbonylmethyl) 4-methoxybutyl (meth)acrylate, di(oxycarbonylmethyl) allyl (meth)acrylate, di(oxycarbonylmethyl) vinyl (meth)acrylate, di[1-(oxypolycarbonyl)ethyl] methyl (meth)acrylate, di[1-(oxypolycarbonyl)ethyl] ethyl (meth)acrylate, di[1-(oxypolycarbonyl)ethyl] n-propyl (meth)acrylate, di[1-(oxypolycarbonyl)ethyl] isopropyl (meth)acrylate, di[1-(oxypolycarbonyl)ethyl] n-butyl (meth)acrylate, di[1-(oxypolycarbonyl)ethyl] t-butyl (meth)acrylate, di[α-(oxycarbonyl)benzyl] methyl (meth)acrylate, and di[α-(oxycarbonyl)benzyl] ethyl (meth)acrylate, preferred examples thereof include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di[1-(oxypolycarbonylethyl)] methyl (meth)acrylate, di[1-(oxypolycarbonylethyl)] ethyl (meth)acrylate, poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly(oxycarbonylmethyl) t-butyl (meth)acrylate, poly(oxycarbonylmethyl) 2-ethylhexyl (meth)acrylate, poly(oxycarbonylmethyl) cyclohexyl (meth)acrylate, poly(oxycarbonylmethyl) benzyl (meth)acrylate, poly(oxycarbonylmethyl) phenyl (meth)acrylate, poly(oxycarbonylmethyl) 2-methoxyethyl (meth)acrylate, poly(oxycarbonylmethyl) 4-methoxybutyl (meth)acrylate, poly(oxycarbonylmethyl) allyl (meth)acrylate, poly(oxycarbonylmethyl) vinyl (meth)acrylate, poly[1-(oxypolycarbonyl)ethyl] methyl (meth)acrylate, poly[1-(oxypolycarbonyl)ethyl] ethyl (meth)acrylate, poly[1-(oxypolycarbonyl)ethyl] n-propyl (meth)acrylate, poly[1-(oxypolycarbonyl)ethyl] isopropyl (meth)acrylate, poly[1-(oxypolycarbonyl)ethyl] n-butyl (meth)acrylate, poly[1-(oxypolycarbonyl)ethyl] t-butyl (meth)acrylate, poly[α-(oxycarbonyl)benzyl] methyl (meth)acrylate, and poly[α-(oxycarbonyl)benzyl] ethyl (meth)acrylate, and preferred examples thereof include poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly[1-(oxypolycarbonylethyl)] methyl (meth)acrylate, and poly[1-(oxypolycarbonylethyl)] ethyl (meth)acrylate.

### 1-1-2. Monomer (b)

The monomer (b) is an ethylenically unsaturated monomer other than the monomer (a). The monomer (b) can be classified into a monomer (b1) and a monomer (b2), and the monomer (b) used in the polymerization of the copolymer A contains one or both of the monomer (b1) and the monomer (b2), and preferably contains the monomer (b1).

### <Monomer (b1)>

The monomer (b1) is represented by general formula (2).

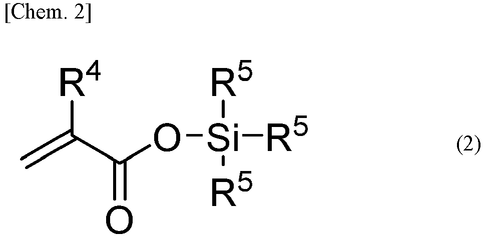

In the formula, R⁴ is hydrogen or a methyl group, and three R⁵ are the same as or different from each other and each represent a branched alkyl group having 3 to 8 carbon atoms or a phenyl group.

The number of carbon atoms in the branched alkyl group is, for example, 3, 4, 5, 6, 7, or 8, and may be within the range between any two numerical values exemplified here. Examples of the branched alkyl group include an isopropyl group, an isopropenyl group, an isobutyl group, a s-butyl group, a t-butyl group, a 1-ethylpropyl group, a 1-methylbutyl group, a 1-methylpentyl group, a 1,1-dimethylpropyl group, a 1,1-dimethylbutyl group, a hexyl group, a cyclohexyl group, a 1,1-dimethylpentyl group, a 1-methylhexyl group, a 1,1-dimethylhexyl group, a 1-methylheptyl group, a 2-methylbutyl group, a 2-ethylbutyl group, a 2,2-dimethylpropyl group, a cyclohexylmethyl group, a 2-ethylhexyl group, a 2-propylpentyl group, and a 3-methylpentyl group. Preferred as R⁸ to R¹⁰ are the same as or different from each other and are an isopropyl group, an isopropenyl group, a s-butyl group, a t-butyl group, a phenyl group, and a 2-ethylhexyl group, and particularly preferred are an isopropyl group and a 2-ethylhexyl group.

Examples of the monomer (b1) include (meth)acrylic acid silyl esters such as triisopropylsilyl (meth)acrylate, triisobutylsilyl (meth)acrylate, tri-s-butylsilyl (meth)acrylate, triisopentylsilyl (meth)acrylate, triphenylsilyl (meth)acrylate, diisopropylphenylsilyl (meth)acrylate, diisopropylisobutylsilyl (meth)acrylate, diisopropyl s-butylsilyl (meth)acrylate, diisopropylisopentylsilyl (meth)acrylate, isopropyl diisobutylsilyl (meth)acrylate, isopropyl di-s-butylsilyl (meth)acrylate, t-butyl diisobutylsilyl (meth)acrylate, t-butyl diisopentylsilyl (meth)acrylate, t-butyl diphenylsilyl (meth)acrylate, diisopropylhexylsilyl (meth)acrylate, diisopropylcyclohexylsilyl (meth)acrylate, tricyclohexylsilyl (meth)acrylate, tri-1,1-dimethylpentylsilyl (meth)acrylate, tri-2,2-dimethylpropylsilyl (meth)acrylate, tricyclohexylmethylsilyl (meth)acrylate, diisopropylcyclohexylmethylsilyl (meth)acrylate, tri-2-ethylhexylsilyl (meth)acrylate, and tri-2-propylpentylsilyl (meth)acrylate. These monomers (b1) may be used singly, or two or more thereof may be used in combination.

### <Monomer (b2)>

The monomer (b2) is the monomer (b) excluding the monomer (b1). In other words, the monomer (b2) is a monomer not represented by any of general formulas (1) and (2). Examples of the monomer (b2) include (meth)acrylic acid esters, vinyl compounds, aromatic compounds and dialkyl ester compounds of dibasic acids, which are not represented by any of general formulas (1) and (2). As used herein, (meth)acrylic acid esters mean acrylic acid esters or methacrylic acid esters.

Examples of the (meth)acrylic acid esters not represented by any of general formulas (1) and (2) include (meth)acrylic acid esters, such as methyl (meth)acrylate, ethyl (meth)acrylate, butyl (meth)acrylate, isobutyl (meth)acrylate, t-butyl (meth)acrylate, 2-ethylhexyl (meth)acrylate, lauryl (meth)acrylate, 2-methoxyethyl (meth)acrylate, 2-methoxypropyl (meth)acrylate, 4-methoxybutyl (meth)acrylate, benzyl (meth)acrylate, phenyl (meth)acrylate, 2-ethoxyethyl (meth)acrylate, propylene glycol monomethyl (meth)acrylate, 2-hydroxyethyl (meth)acrylate, 2-hydroxypropyl (meth)acrylate, glycidyl (meth)acrylate, furfuryl (meth)acrylate, tetrahydrofurfuryl (meth)acrylate, dimethylaminoethyl (meth)acrylate, diethylaminoethyl (meth)acrylate, 2-[2-(2-hydroxyethoxy)ethoxy]ethoxy]ethyl methacrylate, mono(2-(meth)acryloyloxyethyl) succinate, N-(3-dimethylaminopropyl) (meth)acrylamide, 2-hydroxyethyl (meth)acrylate, 2-[2-(2-methoxyethoxy)ethoxy]ethyl (meth)acrylate, and N,N'-dimethyl (meth)acrylamide.

Examples of the vinyl compounds include vinyl compounds having a functional group, such as vinyl chloride, vinylidene chloride, acrylonitrile, methacrylonitrile, vinyl acetate, vinyl benzoate, vinyl butyrate, butyl vinyl ether, lauryl vinyl ether, and N-vinylpyrrolidone.

Examples of the aromatic compounds include styrene, vinyltoluene, and α-methylstyrene.

Examples of the dialkyl ester compounds of dibasic acids include dimethyl maleate, dibutyl maleate, and dimethyl fumarate.

In the copolymer A, these monomers (b) may be used singly, or two or more thereof may be used in combination. From the viewpoint of coating film dissolubility and coating film property, the monomer (b) preferably contains a (meth)acrylic acid ester of the monomer (b1) or the monomer (b2). From the viewpoint of crack resistance, the monomer (b) preferably contains a (meth)acrylic acid ester of the monomer (b2), and more preferably contains methyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, 2-hydroxyethyl (meth)acrylate, glycidyl (meth)acrylate, furfuryl (meth)acrylate, tetrahydrofurfuryl (meth)acrylate, or the like. From the viewpoint of coating film dissolubility, the monomer (b) preferably contains the monomer (b1), and more preferably contains triisopropylsilyl (meth)acrylate, t-butyldiphenylsilyl (meth)acrylate, tri-2-ethylhexylsilyl (meth)acrylate, or the like.

### 1-1-3. Physical Properties and Production Method of Copolymer A

The weight-average molecular weight (Mw) of the copolymer A is preferably 5,000 to 300,000. When the molecular weight is less than 5,000, the coating film formed of the antifouling coating material becomes fragile and easily peels off or cracks, and when the molecular weight exceeds 300,000, the viscosity of the polymer solution increases and handling becomes difficult. Specifically, the Mw is, for example, 5,000, 10,000, 20,000, 30,000, 40,000, 50,000, 60,000, 70,000, 80,000, 90,000, 100,000, 200,000, or 300,000, and may be within the range between any two numerical values exemplified here.

Examples of the method for measuring Mw include gel permeation chromatography (GPC method).

The copolymer A may be a random copolymer, an alternating copolymer, a periodic copolymer, or a block copolymer of the monomer (a) and the monomer (b).

The copolymer A may be obtained, for example, by polymerizing the monomer (a) and the monomer (b) in the presence of a polymerization initiator.

Examples of the polymerization initiator include azo compounds such as 2,2'-azobisisobutyronitrile, 2,2'-azobis(2-methylbutyronitrile), 2,2'-azobis(2,4-dimethylvaleronitrile), dimethyl-2,2'-azobisisobutyrate, dimethyl-2,2'-azobisisobutyrate, and 2,2'-azobis(N-butyl-2-methylpropionamide); peroxides such as benzoyl peroxide, di-tert-butyl peroxide, tert-butyl peroxybenzoate, tert-butyl peroxyisopropyl carbonate, t-butyl peroxy-2-ethylhexanoate, t-hexylperoxy-2-ethylhexanoate, di-t-hexyl peroxide, t-butylperoxy-2-ethylhexyl monocarbonate, di-t-butyl peroxide, 1,1,3,3-tetramethylbutylperoxyneodecanoate, t-amylperoxyneodecanoate, t-hexylperoxypivalate, t-amylperoxypivalate, and 1,1,3,3-tetramethylbutylperoxy-2-ethylhexanoate. These polymerization initiators may be used singly, or two or more thereof may be used in combination. Particularly preferred as the polymerization initiator are 2,2'-azobisisobutyronitrile, 2,2'-azobis(2-methylbutyronitrile), 2,2'-azobis(2,4-dimethylvaleronitrile), dimethyl 2,2'-azobisisobutyrate, and 1,1,3,3-tetramethylbutylperoxy-2-ethylhexanoate. The amount of the polymerization initiator used may be set as appropriate to adjust the molecular weight of the copolymer A. A chain transfer agent may also be used to adjust the molecular weight of the resulting polymer. Examples of the chain transfer agent include mercaptans such as n-dodecylmercaptan; thioglycolic acid esters such as octyl thioglycolate; and α-methylstyrene dimer and terpinolene.

Examples of the polymerization method include solution polymerization, bulk polymerization, emulsion polymerization, suspension polymerization, and non-aqueous dispersion polymerization. Among these, solution polymerization or non-aqueous dispersion polymerization is particularly preferred in that the copolymer A simply and accurately can be obtained therethrough.

In the polymerization reaction, an organic solvent may be used as necessary. Examples of the organic solvent include, but are not limited to, aromatic hydrocarbon solvents such as xylene and toluene; aliphatic hydrocarbon solvents; ester solvents such as ethyl acetate, butyl acetate, isobutyl acetate, methoxy propyl acetate, and propylene glycol 1-monomethyl ether 2-acetate; alcohol solvents such as isopropyl alcohol, butyl alcohol, and propylene glycol monomethyl ether; ether solvents such as dioxane, diethyl ether, and dibutyl ether; and ketone solvents such as methyl ethyl ketone and methyl isobutyl ketone.

Among these, preferred are butyl acetate, isobutyl acetate, butyl alcohol, propylene glycol monomethyl ether, propylene glycol 1-monomethyl ether 2-acetate, toluene, and xylene. These solvents may be used singly, or two or more thereof may be used in combination.

The reaction temperature in the polymerization reaction may be set as appropriate according to the type of the polymerization initiator and the like, and is usually 50 to 160°C, preferably 60 to 150°C.

The polymerization reaction is preferably carried out under an inert gas atmosphere such as nitrogen gas or argon gas.

### 1-2. Polyester Resin C

The polyester resin C of the present invention is a polymer obtained by polymerizing monomers via ester bonds. Examples of monomers constituting the polyester resin C include an acid component, an alcohol component, and an acid/alcohol component.

The polyester resin C of the present invention may produced by the production method described below, or may be a commercially available product. Examples of commercially available products of the polyester resin C include Nichigo POLYESTER TP-217 (manufactured by Mitsubishi Chemical Corporation), Polylite OD-X-2420 (manufactured by DIC Corporation), Vylon GK-680 (manufactured by Toyobo Co., Ltd.), and RESOMER R 202 S, RESOMER RG 502 (manufactured by Evonik).

### 1-2-1. Acid Component

Examples of the acid component include aliphatic dicarboxylic acids such as oxalic acid, malonic acid, maleic acid, fumaric acid, citraconic acid, itaconic acid, glutaconic acid, succinic acid, adipic acid, sebacic acid, azelaic acid, n-dodecylsuccinic acid, and n-dodecenyl succinic acid; aromatic dicarboxylic acids such as phthalic acid, isophthalic acid, and terephthalic acid; alicyclic dicarboxylic acids such as cyclohexane dicarboxylic acid; and trivalent or higher polyvalent carboxylic acids such as trimellitic acid, pyromellitic acid, and citric acid; and anhydrides of these acids.

Further, as monocarboxylic acids for polyester terminal modification, acetic acid, 2-ethylhexanoic acid, benzoic acid, p-t-butylbenzoic acid, versatic acid, naphthenic acid, gum rosin, hydrogenated rosin, and the like can also be used.

These acid components may be used singly, or two or more thereof may be used in combination.

### 1-2-2. Alcohol component

Examples of the alcohol component include dihydric or higher polyhydric alcohols such as ethylene glycol, propylene glycol, polypropylene glycol, 1,2-propanediol, 1,3-propanediol, 1,3-butanediol, 1,4-butanediol, neopentyl glycol, 1,5-pentanediol, 1,6-hexanediol, 3-methylpentanediol, diethylene glycol, 1,4-cyclohexanedimethanol, 3-methyl-1,5-pentanediol, 2-methyl-1,3-propanediol, 2,2-diethyl-1,3-propanediol, 2-butyl-2-ethyl-1,3-propanediol, hydrogenated bisphenol A, ethylene oxide adduct or propylene oxide adduct of bisphenol A, trimethylolethane, trimethylolpropane, glycerin, and pentaerythritol.

Further, as monoalcohols for polyester terminal modification, methanol, ethanol, isopropanol, 2-ethylhexanol, ethylene glycol monomethyl ether, propylene glycol monomethyl ether, 2-(2-butoxyethoxy) ethanol, polyethylene glycol monoalkyl ether, polypropylene glycol monoalkyl ether and the like can also be used.

These alcohol components may be used singly, or two or more thereof may be used in combination.

### 1-2-3. Acid/Alcohol Component

The acid/alcohol component is a component having both an acid group (such as a carboxyl group) and a hydroxyl group or having an ester bond in which an acid group and a hydroxyl group are intramolecularly esterified.

Examples of the acid/alcohol component include a hydroxylcarboxylic acid having a carboxyl group and a hydroxyl group, and a lactone compound in which a carboxyl group and a hydroxyl group are intramolecularly esterified to form a cyclic structure.

Examples of the hydroxylcarboxylic acid include lactic acid, glycolic acid, ricinoleic acid, β-hydroxybutyric acid, β-hydroxyvaleric acid, and salicylic acid. The hydroxylcarboxylic acid may contain one or more carboxyl groups and one or more hydroxyl groups, or may contain two or more carboxyl groups and two or more hydroxyl groups.

Examples of the lactone compound include ε-caprolactone, δ-valerolactone, γ-butyrolactone, β-propiolactone, α-acetolactone, lactide, glycolide, and p-dioxanone. A cyclic ester such as lactide polymerizable therewith may also be included. Preferred are ε-caprolactone and δ-valerolactone. These lactone compounds may be used singly, or two or more thereof may be used in combination.

### 1-2-4. Physical Properties and Production Method of Polyester Resin C

The weight-average molecular weight (Mw) of the polyester resin C is preferably 800 to 50,000, and still more preferably 800 to 35,000. Specifically, Mw is, for example, 800, 900, 1,000, 2,000, 3,000, 4,000, 5,000, 6,000, 7,000, 8,000, 9,000, 10,000, 15,000, 20,000, 25,000, 30,000, 35,000, 40,000, 45,000, or 50,000, and may be within the range between any two numerical values exemplified here. Examples of the method for measuring Mw include gel permeation chromatography (GPC).

The hydroxyl value of the polyester resin C is, for example, 0 to 200 mgKOH/g, specifically, for example, 0, 10, 20, 30, 40, 50, 60, 70, 80, 90, 100, 110, 120, 130, 140, 150, 160, 170, 180, 190, or 200 mgKOH/g, and may be within the range between any two numerical values exemplified here. The acid value of the polyester resin C is, for example, 0 to 25 mgKOH/g, specifically, for example, 0.0, 0.1, 0.2, 0.3, 0.4, 0.5, 0.6, 0.7, 0.8, 0.9, 1.0, 1.1, 1.2, 1.3, 1.4, 1.5, 2, 3, 4, 5, 6, 7, 8, 9, 10, 11, 12, 13, 14, 15, 16, 17, 18, 19, 20, 21, 22, 23, 24, 25 mgKOH/g, and may be within the range between any two numerical values exemplified here.

The polyester resin C is produced, for example, by an esterification reaction or a transesterification reaction of a monomer component constituted by at least one of an acid component, an alcohol component, and an acid/alcohol component, or a ring-opening polymerization reaction of a lactone compound.

Examples of the compositional feature of the monomer components are as follows.
- Combination of acid component and alcohol component
- Combination of acid component, alcohol component, and hydroxylcarboxylic acid
- Hydroxylcarboxylic acid only
- Combination of alcohol component and lactone compound

Specifically, the polyester resin C may be produced by first blending the monomer components and then performing an esterification reaction or a transesterification reaction at 180 to 250°C in the presence of a catalyst such as an organotitanium compound or an organotin compound using a known production method, such as a melting method or a solvent method (reflux method) using toluene or xylene.

Alternatively, the polyester resin C may also be produced by blending a lactone compound and a polyhydric alcohol as initiators, and performing a ring-opening polymerization by a known production method at 130 to 220°C in the presence of a catalyst such as an organotitanium compound or an organotin compound production method.

The content of the polyester resin C in the composition of the present invention is not particularly limited, but the mass ratio (copolymer A/polyester resin C) as the content ratio with respect to the copolymer A is usually 0.1 to 20, and preferably 0.1 to 12, in terms of solid content. The mass ratio is, for example, 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, or 20, and may be within the range between any two numerical values exemplified here.

The polyester resin C in the composition of the present invention is not particularly limited, but the solubility can be improved by using a polyester having hydrolyzability in seawater as the polyester resin.

Furthermore, by using a biodegradable polyester, the biodegradability of the composition can be increased. Examples of the biodegradable polyester include polyester having a structure, such as polyglycolic acid, polylactic acid, polyhydroxyalkanoate, 3-hydroxybutyric acid-3-hydroxyhexanoic acid copolymer polyester, polybutylene succinate, polybutylene adipate terephthalate, and polyethylene terephthalate succinate. As a method for testing biodegradability, a method in accordance with "ASTM D6691" can be used. In addition, by using polyester obtained using raw materials derived from biomass, the biomass degree of the composition can be increased.

### 1-3. Antifouling Agent D

Examples of the antifouling agent include inorganic agents and organic agents.
Examples of inorganic chemicals include cuprous oxide, copper thiocyanate (generic name: copper rhodanide), and copper powder. Among these, preferred are cuprous oxide and copper rhodanide, and more preferred is cuprous oxide surface-treated with glycerin, sucrose, stearic acid, lauric acid, lecithin, mineral oil and the like in view of long-term stability during storage.

Examples of organic agents include copper 2-mercaptopyridine-N-oxide (generic name: copper pyrithione), zinc 2-mercaptopyridine-N-oxide (generic name: zinc pyrithione), zinc ethylene-bis-dithiocarbamate (generic name: Zineb), 4,5-dichloro-2-n-octyl-3-isothiazolone (generic name: SEA-NINE 211), 3,4-dichlorophenyl-N,N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethylpyrrole (generic name: Econea 28), and 4-[1-(2,3-dimethylphenyl)ethyl]-1H-imidazole (generic name: medetomidine). There are methods for improving the handleability and effectiveness of these organic agents by adsorbing these on activated carbon, encapsulating these by coating or the like, forming these into organic salts, or diluting these with various solvents, and organic agents appropriately adjusted by these methods may also be used.

These antifouling agents may be used singly, or two or more thereof may be used in combination.

The content of the antifouling agent in the composition of the present invention is not particularly limited, but is usually 0.1 to 60.0% by mass, in terms of solid content. The content of the antifouling agent is, for example, 0.1, 0.5, 1, 2, 3, 4, 5, 6, 7, 8, 9, 10, 15, 20, 25, 30, 35, 40, 45, 50, 55, or 60% by mass, and may be within the range between any two numerical values exemplified here.

### 1-4. Other Additives

If necessary, a resin component other than the copolymer A and the polyester resin C, a release modifier, a plasticizer, a pigment, a dye, an antifoaming agent, a dehydrating agent, a thixotropic agent, an organic solvent, or the like may be further added to the resin for the antifouling coating material of the present invention to obtain the antifouling coating material.

Examples of the other resin component include a copolymer B and a polymer P.

The copolymer B is a copolymer of the monomer (b1) and the monomer (b2), and contains monomer units derived from the monomer (b1) and the monomer (b2). The content of the monomer (b1) with respect to the total of the monomer (b1) and the monomer (b2) is preferably 10 to 90% by mass, and still more preferably 20 to 70% by mass. Specifically, the content thereof is, for example, 10, 15, 20, 25, 30, 35, 40, 45, 50, 55, 60, 65, 70, 75, 80, 85, or 90% by mass, and may be within the range between any two numerical values exemplified here. In this case, the coating film dissolubility is particularly good.

The polymerization method, initiator, solvent, temperature, other conditions, Mw measurement method, and the like may be applied to the method described above for the copolymer A.

The content of the copolymer B in the composition of the present invention is not particularly limited, but the mass ratio (copolymer B/copolymer A) as the content ratio with respect to the copolymer A is usually 0.1 to 0.9, and preferably 0.3 to 0.7, in terms of solid content. The mass ratio is, for example, 0.1, 0.2, 0.3, 0.4, 0.5, 0.6, 0.7, 0.8, or 0.9, and may be within the range between any two numerical values exemplified here.

The polymer P is a polymer obtained by polymerizing the monomer (b2).

In the present invention, these monomers (b2) may be used singly, or two or more thereof may be used in combination. In particular, from the viewpoint of compatibility with the copolymer A, preferred are methyl (meth)acrylate, ethyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, furfuryl (meth)acrylate, tetrahydrofurfuryl (meth)acrylate, benzyl (meth)acrylate, and the like.

The polymerization method, initiator, solvent, temperature, other conditions, Mw measurement method, and the like may be applied to the method described above for the copolymer A.

The content of the polymer P in the composition of the present invention is not particularly limited, but the mass ratio (polymer P/copolymer A) as the content ratio with respect to the copolymer A is usually 0.1 to 0.5, and preferably 0.1 to 0.3, in terms of solid content. The mass ratio is, for example, 0.1, 0.2, 0.3, 0.4, or 0.5, and may be within the range between any two numerical values exemplified here.

Examples of the release modifier include rosin, rosin derivative, monocarboxylic acid and salts thereof, such as naphthenic acid, cycloalkenyl carboxylic acid, bicycloalkenyl carboxylic acid, versatic acid, trimethyl isobutenyl cyclohexene carboxylic acid, and metal salts thereof, and alicyclic hydrocarbon resins described above. These may be used singly or in combination of two or more thereof.

Examples of the rosin derivative include hydrogenated rosin, disproportionated rosin, maleated rosin, formylated rosin, and polymerized rosin.

Examples of the alicyclic hydrocarbon resin include commercially available products such as Quintone 1500, 1525L, and 1700 (product names, manufactured by ZEON CORPORATION).

Among these, preferred are rosin, rosin derivatives, naphthenic acid, versatic acid, trimethylisobutenylcyclohexenecarboxylic acid, and metal salts thereof.

Examples of the plasticizer include phosphate esters, phthalate esters, trimellitate esters, adipate esters, sebacate esters, other (mixed group) dibasic acid esters, epoxidized soybean oil, epoxy linseed oil, alkyl vinyl ether polymer, polyalkylene glycols, t-nonyl pentasulfide, vaseline, polybutene, tris(2-ethylhexyl) trimellitate, silicone oil, chlorinated paraffin, and liquid paraffin. These may be used singly or in combination of two or more thereof.

Examples of the dehydrating agent include calcium sulfate, synthetic zeolite adsorbents, orthoesters, silicates such as tetramethoxysilane and tetraethoxysilane, isocyanates, carbodiimides, and carbodiimidazoles. These may be used singly, or two or more thereof may be used in combination.

### 2. Method for Producing Antifouling Coating Composition

The antifouling coating composition of the present invention may be produced, for example, by mixing and dispersing a mixed solution containing the copolymer A, the polyester resin C, the antifouling agent D, other additives, and the like using a disperser.

The mixed solution is preferably prepared by dissolving or dispersing various materials such as the copolymer A, the polyester resin C, and the antifouling agent D in a solvent.

A disperser that may be used as a fine pulverizer may be suitably used, for example, as the disperser. For example, commercially available homomixers, sand mills, bead mills, dispersers, or the like may be used. Alternatively, glass beads or the like for mixing and dispersing may be charged into a container equipped with a stirrer and used for mixing and dispersing the mixed solution.

### 3. Method for Antifouling Treatment, Antifouling Coating Film, and Coated Article

In the antifouling treatment method of the present invention, an antifouling coating film is formed on the surface of an object to be coated with the above antifouling coating composition. According to the antifouling treatment method of the present invention, the antifouling coating film gradually dissolves from the surface and the coating film surface is constantly renewed, thereby preventing adhesion of aquatic fouling organisms.

Examples of the object to be coated include ships (in particular, ship bottoms), fishing tools, and underwater structures.

The thickness of the antifouling coating film may be set as appropriate according to the type of object to be coated, sailing speed of the ship, seawater temperature, and the like. For example, in a case where the object to be coated is the bottom of a ship, the thickness of the antifouling coating film is usually 50 to 700 µm, and preferably 100 to 600 µm.

### Examples

The features of the present invention will be further clarified by Examples and the like to be described below. The present invention, however, is not limited to these Examples and the like.

In each of Production Examples, Examples, and Comparative Examples, "%" represents "% by mass".

The weight-average molecular weight (Mw) is a value obtained by GPC (polystyrene equivalent). The conditions for GPC were as follows.
Equipment: HLC-8220GPC manufactured by Tosoh Corporation
Column: TSKgel SuperHZM-M × 2
Flow rate: 0.35 mL/min
Detector: RI
Column thermostatic bath temperature: 40°C
Eluent: THF

The non-volatile matter is a value measured in accordance with JIS K 5601-1-2:1999 (ISO 3251:1993) "Testing Methods for Paint Components: Determination Of Non-Volatile matter".

### 1. Production Example

### 1-1. Production Example of Monomer (a1)

### <Production Example 1 (Production of Monomer al-1)>

Into a four-necked flask equipped with a thermometer, a condenser, a stirrer, and a dropping funnel, 109 g (1.00 mol) of methyl chloroacetate, 72 g (1.00 mol) of acrylic acid, 0.1 g of 4-methoxyphenol, and 500 g of ethyl acetate were charged, and 101 g (1.00 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 129.7 g of a monomer a1-1.

### <Production Examples 2 to 3 (Production of Monomers a1-2 to a1-3)>

Monomers a1-2 to a1-3 were obtained by performing reactions in the same manner as in Production Example 1 using the raw materials shown in Table 1. The reaction conditions and yields of Production Examples 1 to 3 are shown in Table 1.

**[Table 1]**

| Table 1 | | | | | Raw material (g) | | | | | | | Yield |
|---|---|---|---|---|---|---|---|---|---|---|---|---|
| Production Example | Monomer | R1 | R2 | R3 | CAMe | CAEt | AA | MAA | TEA | Ethyl acetate | MEHQ | (g) |
| 1 | a1-1 | H | H | Me | 109 | | 72 | | 101 | 500 | 0.1 | 129.7 |
| 2 | a1-2 | H | H | Et | | 123 | 72 | | 101 | 500 | 0.1 | 142.3 |
| 3 | a1-3 | Me | H | Et | | 123 | | 86 | 101 | 500 | 0.1 | 155.0 |

### 1-2. Production Example of Monomer (a2)

### <Production Example 4 (Production of Monomer a2-1)>

### (First Reaction)

Into a four-necked flask equipped with a thermometer, a condenser, and a stirrer, 215 g (1.85 mol) of sodium monochloroacetate, 201 g (1.85 mol) of methyl chloroacetate, and 300 g of N-methyl-2-pyrrolidone were charged, and the mixture was stirred at 70 to 80°C for 6 hours. After completion of the reaction, 500 ml of toluene was added to the reaction solution, and the organic layer was washed with city water, hydrochloric acid water, and sodium bicarbonate water in this order, and then the solvent was removed by concentration under reduced pressure to give 262 g of methoxycarbonyl methyl chloroacetate.

### (Second Reaction)

Subsequently, into a four-necked flask equipped with a thermometer, a condenser, a stirrer, and a dropping funnel, 200 g (1.20 mol) of methoxycarbonyl methyl chloroacetate, which is the product of the first reaction, 87 g (1.20 mol) of acrylic acid, 0.1 g of 4-methoxyphenol, and 500 g of ethyl acetate were charged, and 122 g (1.20 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 230.6 g of a monomer a2-1.

### <Production Examples 5 to 18 (Production of Monomers a2-2 to a2-15)>

Monomers a2-2 to a2-15 shown in Table 2 were obtained by performing reactions in the same manner as in Production Example 4 using the raw materials shown in Table 2. The reaction conditions and yields of Production Examples 4 to 18 are shown in Table 2.

**[Table 2]**

| Table 2 | | | | | | First reaction | | | | | Second reaction | | | | | | |
|---|---|---|---|---|---|---|---|---|---|---|---|---|---|---|---|---|---|
| | | | | | | Raw material (g) | | | | Intermediate | Raw material (g) | | | | | | Yield |
| Production Example | Monomer | R1 | R2 | R3 | n | CANa | CAMe | CAEt | NMP | Yield (g) | Intermediate | AA | MAA | TEA | Ethyl acetate | MEHQ | (g) |
| 4 | a2-1 | H | H | Me | 2 | 215 | 201 | | 300 | 262 | 200 | 87 | | 122 | 500 | 0.1 | 230.6 |
| 5 | a2-2 | H | H | Et | 2 | 199 | | 209 | 300 | 269 | 200 | 80 | | 112 | 500 | 0.1 | 227.5 |
| 6 | a2-3 | Me | H | Et | 2 | 199 | | 209 | 300 | 269 | 200 | | 95 | 112 | 500 | 0.1 | 227.5 |
| 7 | a2-4 | H | H | Me | 3 | 321 | 150 | | 300 | 260 | 200 | 64 | | 90 | 500 | 0.1 | 220.1 |
| 8 | a2-5 | H | H | Et | 3 | 305 | | 160 | 300 | 266 | 200 | 60 | | 85 | 500 | 0.1 | 218.3 |
| 9 | a2-6 | Me | H | Et | 3 | 305 | | 160 | 300 | 266 | 200 | | 72 | 85 | 500 | 0.1 | 218.3 |
| 10 | a2-7 | H | H | Me | 4 | 384 | 119 | | 300 | 261 | 200 | 51 | | 72 | 500 | 0.1 | 232.8 |
| 11 | a2-8 | H | H | Et | 4 | 349 | | 123 | 300 | 252 | 200 | 49 | | 68 | 500 | 0.1 | 193.6 |
| 12 | a2-9 | Me | H | Et | 4 | 349 | | 123 | 300 | 252 | 200 | | 58 | 68 | 500 | 0.1 | 193.6 |
| 13 | a2-10 | H | H | Me | 5 | 419 | 98 | | 300 | 258 | 200 | 42 | | 59 | 500 | 0.1 | 208.8 |
| 14 | a2-11 | H | H | Et | 5 | 373 | | 98 | 300 | 241 | 200 | 41 | | 57 | 500 | 0.1 | 177.0 |
| 15 | a2-12 | Me | H | Et | 5 | 382 | | 100 | 300 | 247 | 200 | | 49 | 57 | 500 | 0.1 | 177.0 |
| 16 | a2-13 | H | H | Me | 6 | 437 | 81 | | 300 | 251 | 200 | 36 | | 51 | 500 | 0.1 | 191.8 |
| 17 | a2-14 | H | H | Et | 6 | 408 | | 86 | 300 | 246 | 200 | 35 | | 49 | 500 | 0.1 | 165.0 |
| 18 | a2-15 | Me | H | Et | 6 | 408 | | 86 | 300 | 246 | 200 | | 42 | 49 | 500 | 0.1 | 165.0 |

The details of the raw materials in Tables 1 to 2 are as follows.
CAMe: methyl chloroacetate
CAEt: ethyl chloroacetate
AA: acrylic acid
MAA: methacrylic acid
TEA: triethylamine
MEHQ: 4-methoxyphenol
CANa: sodium monochloroacetate
NMP: N-methyl-2-pyrrolidone

### 1-3. Production Example of Copolymer Solution

### <Production Example P1 (Production of Copolymer Solution A-1)>

Into a four-necked flask equipped with a thermometer, a condenser, a stirrer, and a dropping funnel, 80 g of xylene and 20 g of 1-butanol were charged as solvents, nitrogen gas was introduced, and the mixture was stirred while maintaining the temperature at 88°C. Then, a mixed solution of the monomer (a1), the monomer (a2), and the monomer (b) in the amounts (g) shown in Table 3 and 2.0 g of 1,1,3,3-tetramethylbutylperoxy-2-ethylhexanoate as a polymerization initiator (initial addition) was added dropwise over 3 hours while maintaining the temperature at 88°C. Thereafter, after stirring at 88°C for 1 hour, 0.1 g of 1,1,3,3-tetramethylbutylperoxy-2-ethylhexanoate was added 3 times every hour, and after stirring for 2 hours at the same temperature, the mixture was cooled to room temperature to obtain a copolymer solution A-1. The non-volatile matter and Mw of A-1 are shown in Table 3.

### <Production Examples P2 to P5 (Production of Copolymer Solutions A-2 to A-5)>

Copolymer solutions A-2 to A-5 were obtained by performing a polymerization reaction in the same manner as in Production Example P1 except that the monomers, polymerization initiators, and solvents shown in Table 3 were used. The non-volatile matter and Mw of each polymer are shown in Table 3. The unit of numerical values for the amounts of raw materials in the table is g.

**[Table 3]**

| Table 3 | | Production Example | | | | |
|---|---|---|---|---|---|---|
| | | P1 | P2 | P3 | P4 | P5 |
| Monomer (a1) | a1-1 | 33 | | | | |
| | a1-2 | | 40 | 40 | | 20 |
| | a1-3 | | | | 47 | 23 |
| Monomer (a2) | a2-1 | 10 | | | | |
| | a2-2 | | 12 | 12 | | 4 |
| | a2-3 | | | | 8 | 4 |
| | a2-4 | 4 | | | | |
| | a2-5 | | 5 | 5 | | 3 |
| | a2-6 | | | | 2 | 2 |
| | a2-7 | 1 | | | | |
| | a2-8 | | 1 | 1 | | 1 |
| | a2-9 | | | | 1 | 1 |
| | a2-10 | 1 | | | | |
| | a2-11 | | 1 | 1 | | 1 |
| | a2-12 | | | | 1 | 1 |
| | a2-13 | 1 | | | | |
| | a2-14 | | 1 | 1 | | |
| | a2-15 | | | | 1 | |
| Monomer (b) | methyl methacrylate | 40 | 30 | 30 | 30 | 22 |
| | butyl acrylate | | | 5 | 5 | |
| | 2-methoxyethyl acrylate | 10 | 10 | 2 | 2 | 10 |
| | 2-methoxyethyl methacrylate | | | 3 | 3 | |
| | triisopropylsilyl acrylate | | | | | 3 |
| | triisopropylsilyl methacrylate | | | | | 5 |
| Total of monomer solid contents | | 100 | 100 | 100 | 100 | 100 |
| Solvent | xylene | 80 | 80 | 50 | 100 | 50 |
| | 1-butanol | 20 | 20 | | | |
| | butyl acetate | | | 50 | | 50 |
| Weight-average molecular weight (Mw) | | 31200 | 31400 | 30000 | 29800 | 30500 |
| Non-volatile matter (%, 125°C, 1 hour) | | 51.2 | 51.5 | 51.5 | 51.3 | 51.5 |
| Copolymer solution name | | A-1 | A-2 | A-3 | A-4 | A-5 |

### <Production Example P6 (Production of Copolymer Solution B-1)>

Into a flask equipped with a thermometer, a refluxing condenser, a stirrer, and a dropping funnel, 200 g of xylene was charged, and under a nitrogen atmosphere with stirring at 85±5°C, a mixed solution of 270 g of triisopropylsilyl acrylate, 200 g of methyl methacrylate, 25 g of 2-methoxyethyl acrylate, 5 g of tetrahydrofurfuryl acrylate, and 2.4 g of 1,1,3,3-tetramethylbutylperoxy-2-ethylhexanoate as a polymerization initiator was added dropwise over 2 hours. After stirring at the same temperature for 1 hour, 0.3 g of 1,1,3,3-tetramethylbutylperoxy-2-ethylhexanoate was added 5 times every hour to complete the polymerization reaction, and thereafter, xylene was added and dissolved such that the non-volatile matter was 50%, thereby obtaining a triorganosilyl ester-containing copolymer solution B-1. The resulting copolymer solution had a viscosity of 300 mPa s (25°C), a non-volatile matter of 49.5%, and an Mw of 48,000.

### 1-4. Production Examples of Polyester Resin C

The acid values of various polyesters are values measured in accordance with Standard Methods for the Analysis of Fats, Oils and Related Materials 2.3.1-2013, established by Japan Oil Chemists' Society, and the hydroxyl values are values measured in accordance with Standard Methods for the Analysis of Fats, Oils and Related Materials 2.3.6.2-1996, established by Japan Oil Chemists' Society.

### <Production Example C1 (Production of Polyester C-1)>

Into a reactor, 146 g of adipic acid (acid component) and 131 g of 1,4-butanediol (alcohol component) were charged, and the mixture was stirred at 200°C under normal pressure, water produced was distilled off, and an esterification reaction was carried out. When the amount of water produced decreased, 0.02 g of tetraisopropyl titanate (catalyst) was added, and the reaction was continued while pressure was reduced to 100 to 200 mmHg. When the acid value reached 1.0 mgKOH/g, the degree of vacuum was gradually increased with a vacuum pump to complete the reaction. The hydroxyl value, acid value and Mw of the resulting polyester C-1 are shown in Table 4.

### <Production Examples C2 to C13 (Production of Polyesters C-2 to C-13)>

An esterification reaction was carried out in the same manner as in Production Example C1, except that the acid components, alcohol components, and catalysts shown in Table 4 were used and the amounts charged were appropriately adjusted, to obtain corresponding polyesters. The hydroxyl value, acid value and Mw of various polyesters are shown in Table 4.

### <Production Examples C14 to C20 (Production of Polyesters C-14 to C-20)>

An esterification reaction was carried out in the same manner as in Production Example C1, except that the acid components, alcohol components, and acid/alcohol components shown in Table 4 were used, the catalysts shown in Table 4 were used in an amount of 0. 05 mol% with respect to the total amount of the acid components, alcohol components, and acid/alcohol components as raw materials, the amounts charged, the reaction temperature, and the like were appropriately adjusted, and the end point of the reaction was set to the point at which the Mw no longer changed as a result of GPC analysis (the point at which the change in Mw was 500 or less in absolute value) every hour after the addition of the catalyst, to obtain corresponding polyesters. The Mw of various polyesters are shown in Table 4.

### <Production Example C21 (Production of Polyester C-21)>

Into a reactor, 159.6 g of ε-caprolactone, 60 g of δ-valerolactone, 26 g of neopentyl glycol, and 0.01 g of tetrabutyl titanate were charged and subjected to an esterification reaction at 170°C for 4 hours. The hydroxyl value, acid value and Mw of various polyesters are shown in Table 4.

### <Production Example C22 (Production of Polyester C-22)>

An esterification reaction was performed in the same manner as in Production Example C21, except that the alcohol component and lactone compound shown in Table 4 were used and the amount charged was appropriately adjusted, to obtain a polyester C-22. The hydroxyl value, acid value and Mw of the resulting C-22 are shown in Table 4.

### <Production Example C23 (Production of Polyester C-23)>

Into a reactor, 300 g of polycaprolactone triol ("Average Mn ~ 300" manufactured by Sigma-Aldrich Co. LLC.), 70 g of hydrogenated rosin ("HYPALE CH" manufactured by Arakawa Chemical Industries, Ltd.), and 0.2 g of tetraisopropyl titanate (catalyst) was charged, and the mixture was stirred at 200°C under normal pressure, water produced was distilled off, and an esterification reaction was carried out. When water generation decreased, the temperature was increased to 230°C, and the reaction was completed by heating and stirring for 3 hours. The resulting polyester C-23 had an Mw of 800.

**[Table 4]**

| Table 4 | | Raw material (g) | | | | | Various analysis results | | |
|---|---|---|---|---|---|---|---|---|---|
| Production Example | Polyester | Acid component | Alcohol component | Acid/Alcohol component | | Catalyst | Hydroxyl value | Acid value | Mw |
| | | | | Hydroxycarboxylic acid | Lactone compound | | (mg · KOH/g) | | |
| C1 | C-1 | AD | 1,4BD | | | Ti(OiPr)₄ | 114 | 0.2 | 3,000 |
| C2 | C-2 | SA | 1,3PD | | | Ti(OiPr)₄ | 115 | 0.2 | 3,400 |
| C3 | C-3 | AD | ND | | | Ti(OiPr)₄ | 114 | 0.1 | 4,000 |
| C4 | C-4 | AD | HD(70) NPG(30) | | | Ti(OiPr)₄ | 56 | 0.1 | 6,400 |
| C5 | C-5 | AD | MPD | | | Ti(OiPr)₄ | 57 | 0.3 | 6,000 |
| C6 | C-6 | AD (80) PA(20) | 1,4BD | | | Ti(OiPr)₄ | 112 | 0.2 | 3,500 |
| C7 | C-7 | SA(80) IPA(20) | 1,3PD | | | Ti(OiPr)₄ | 113 | 0.2 | 3,100 |
| C8 | C-8 | AD | 1,4BD (70) CHDM (30) | | | Ti(OiPr)₄ | 112 | 0.1 | 3,600 |
| C9 | C-9 | AD | PD9 | | | Ti(OiPr)₄ | 56 | 0.1 | 5,300 |
| C10 | C-10 | PA | HD | | | Ti(OiPr)₄ | 53 | 0.1 | 4,300 |
| C11 | C-11 | PA | PD9 | | | Ti(OiPr)₄ | 53 | 1.1 | 4,000 |
| C12 | C-12 | PA | NPG | | | Ti(OiPr)₄ | 38 | 0.3 | 5,000 |
| C13 | C-13 | IPA | DEG | | | Ti(OiPr)₄ | 20 | 0.3 | 16,000 |
| C14 | C-14 | PA[47] | GOL[27] BEE[26] | | | Ti(OBu)₄ | - | - | 8,000 |
| C15 | C-15 | DGA[50] | PEG[50] | | | Ti(OBu)₄ | - | - | 5,600 |
| C16 | C-16 | AD[45] HRA[5] | POL [5] 1,4BD [45] | | | U-28 | - | - | 10,000 |
| C17 | C-17 | | | LA[50] GA[50] | | DBTO | - | - | 8,500 |
| C18 | C-18 | KA[33] | 1,4BD [34] | LA[33] | | DBTO | - | - | 26,000 |
| C19 | C-19 | KA[33] | 1,4BD [34] | GA[33] | | DBTO | - | - | 9,000 |
| C20 | C-20 | PA[33] | 1,4BD [34] | LA[33] | | DBTO | - | - | 2,400 |
| C21 | C-21 | | NPG | | CL(70) VL(30) | Ti(OBu)₄ | 110 | 0.1 | 3,000 |
| C22 | C-22 | | NPG | | CL | Ti(OBu)₄ | 113 | 0.1 | 2,900 |
| Note 1: The number in () represents the molar ratio of the compound in the component. | | | | | | | | | |
| Note 2: The number in [] represents the molar ratio of the compound in the polyester. | | | | | | | | | |

The details of the raw materials in Table 4 are as follows.
KA: succinic acid
AD: adipic acid
SA: sebacic acid
PA: orthophthalic acid
IPA: isophthalic acid
DGA: diglycolic acid
HRA: hydrogenated rosin
CL: ε-caprolactone
VL: δ-valerolactone
LA: lactic acid
GA: glycolic acid
1,4BD: 1,4-butanediol
1,3PD: 1,3-propanediol
HD: 1,6-hexanediol
ND: 1,9-nonanediol
NPG: neopentyl glycol
MPD: 3-methyl-1,5-pentanediol
CHDM: 1,4-cyclohexanedimethanol
PD9: 2,4-diethyl-1,5-pentanediol
DEG: diethylene glycol
PEG: PEG200 (average molecular weight: 180 to 220)
GOL: glycerol
POL: pentaerythritol
BEE: 2-(2-butoxyethoxy) ethanol
Ti(OiPr)₄: titanium (IV) isopropoxide
Ti(OBu)₄: titanium (IV) butoxide
U-28: tin (II) 2-ethylhexanoate
DBTO: dibutyltin oxide

### 1-5. Other Production Examples

### <Production Example D1 (Production of Gum Rosin Solution)>

Into a flask equipped with a thermometer, a refluxing condenser, and a stirrer, 300 g of Chinese gum rosin (WW) and 310 g of xylene were added, and the mixture was refluxed and dehydrated under reduced pressure at 70 to 80°C for 1 hour to obtain a xylene solution of gum rosin (brown transparent liquid, solid content: 50%). The non-volatile matter of the resulting solution was 50.3%.

### <Production Example D2 (Production of Hydrogenated Rosin Solution)>

A xylene solution of hydrogenated rosin (brown transparent liquid, solid content: 50%) was obtained in the same manner as in Production Example D1, except that Chinese gum rosin (WW) in Production Example D1 was changed to hydrogenated rosin. The non-volatile matter of the resulting solution was 50.1%.

### <Production Example D3 (Production of Gum Rosin Zinc Salt Solution)>

Into a flask equipped with a thermometer, a refluxing condenser, and a stirrer, 240 g of Chinese gum rosin (WW) and 360 g of xylene were added, and 120 g of zinc oxide was further added thereto so that all the resin acids in the rosin form zinc salts, and the mixture was refluxed and dehydrated under reduced pressure at 70 to 80°C for 3 hours. Thereafter, the mixture was cooled and filtered to obtain a xylene solution of gum rosin zinc salt (dark brown transparent liquid, solid content 50%). The non-volatile matter of the resulting solution was 50.2%.

### <Production Example D4 (Production of Hydrogenated Rosin Zinc Salt Solution)>

A xylene solution of hydrogenated rosin zinc salt (dark brown transparent liquid, solid content: 50%) was obtained in the same manner as in Production Example D3, except that Chinese gum rosin (WW) in Production Example D3 was changed to hydrogenated rosin. The non-volatile matter of the resulting solution was 50.5%.

### <Production Example D5 (Production of Trimethylisobutenylcyclohexenecarboxylic Acid Solution)>

Into a flask equipped with a thermometer, a refluxing condenser, and a stirrer, 320 g of alloocimene, 175 g of methacrylic acid, and 0.17 g of MEHQ were added, and the mixture was heated and stirred at 35 to 45°C for 24 hours. Thereafter, unreacted raw materials were distilled off under reduced pressure to give 73 g of brown viscous trimethylisobutenylcyclohexenecarboxylic acid. Xylene was added thereto to prepare a trimethylisobutenylcyclohexenecarboxylic acid solution (solid content: 50%).

### 2. Examples 1 to 76 and Comparative Examples 1 to 7 (Production of Coating Composition)

The components shown in Tables 5 to 14 were blended in the proportions (% by mass) shown in the same tables, and the coating compositions were produced by mixing and dispersing the mixture with glass beads of 1.5 to 2.5 mm in diameter.

**[Table 5]**

| Table 5 | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Copolymer A | copolymer solution A-1 | 20 | 20 | 20 | 20 | 20 | 20 | 20 | 20 | 20 | 20 | 20 |
| Polyester C | C-1 | 5 | | | | | | | | | | |
| | C-2 | | 5 | | | | | | | | | |
| | C-3 | | | 5 | | | | | | | | |
| | C-4 | | | | 5 | | | | | | | |
| | C-5 | | | | | 5 | | | | | | |
| | C-6 | | | | | | 5 | | | | | |
| | C-7 | | | | | | | 5 | | | | |
| | C-8 | | | | | | | | 5 | | | |
| | C-9 | | | | | | | | | 5 | | |
| | C-10 | | | | | | | | | | 5 | |
| | C-11 | | | | | | | | | | | 5 |
| Antifoulin agent D | cuprous oxide | 45 | 45 | 45 | 45 | 45 | 45 | 45 | 45 | 45 | 45 | 45 |
| | copper pyrithione | 3 | 3 | 3 | 3 | 3 | 3 | 3 | 3 | 3 | 3 | 3 |
| Release modifier | hydrogenated rosin zinc salt solution | 3 | 3 | 3 | 3 | 3 | 3 | 3 | 3 | 3 | 3 | 3 |
| | gum rosin zinc salt solution | 3 | 3 | 3 | 3 | 3 | 3 | 3 | 3 | 3 | 3 | 3 |
| Pigment | red iron oxide | 2 | 2 | 2 | 2 | 2 | 2 | 2 | 2 | 2 | 2 | 2 |
| | tale | 2 | 2 | 2 | 2 | 2 | 2 | 2 | 2 | 2 | 2 | 2 |
| | zinc oxide | 4 | 4 | 4 | 4 | 4 | 4 | 4 | 4 | 4 | 4 | 4 |
| | titanium oxide | 1 | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 | 3 |
| | tetraethoxysilane | 0.5 | 0.5 | 0.5 | 0.5 | 0.5 | 0.5 | 0.5 | 0.5 | 0.5 | 0.5 | 0.5 |
| | ESBO | 2 | 2 | 2 | 2 | 2 | 2 | 2 | 2 | 2 | 2 | 2 |
| Solvent | xylene | 3.5 | 3.5 | 3.5 | 3.5 | 3.5 | 3.5 | 3.5 | 3.5 | 3.5 | 3.5 | 3.5 |
| | 1-butanol | 3 | 3 | 3 | 3 | 3 | 3 | 3 | 3 | 3 | 3 | 3 |
| Total | | 100 | 100 | 100 | 100 | 100 | 100 | 100 | 100 | 100 | 100 | 100 |
| Test Example 1 | coating film condition after 12 months | AA | AA | AA | AA | AA | AA | AA | AA | AA | AA | AA |
| Rotary Test | coating film condition after 24 months | AA | AA | AA | AA | AA | AA | AA | AA | AA | AA | AA |
| Test Example 2 | after 18 months | AA | AA | AA | AA | AA | AA | AA | AA | AA | AA | AA |
| Antifouling Test | after 36 months | AA | AA | AA | AA | AA | AA | AA | AA | AA | AA | AA |

**[Table 6]**

| Table 6 | | Example | | | | | | | | | | | |
|---|---|---|---|---|---|---|---|---|---|---|---|---|---|
| | | 12 | 13 | 14 | 15 | 16 | 17 | 18 | 19 | 20 | 21 | 22 | 23 |
| Copolymer A | copolymer solution A-1 | 20 | 20 | 20 | 20 | 20 | 20 | 20 | 20 | 20 | 20 | 20 | 20 |
| Polyester C | C-12 | 5 | | | | | | | | | | | |
| | C-13 | | 5 | | | | | | | | | | |
| | C-14 | | | 5 | | | | | | | | | |
| | C-15 | | | | 5 | | | | | | | | |
| | C-16 | | | | | 5 | | | | | | | |
| | C-17 | | | | | | 5 | | | | | | |
| | C-18 | | | | | | | 5 | | | | | |
| | C-19 | | | | | | | | 5 | | | | |
| | C-20 | | | | | | | | | 5 | | | |
| | C-21 | | | | | | | | | | 5 | | |
| | C-22 | | | | | | | | | | | 5 | |
| | C-23 | | | | | | | | | | | | 5 |
| Antifouling agent D | cuprous oxide | 45 | 45 | 45 | 45 | 45 | 45 | 45 | 45 | 45 | 45 | 45 | 45 |
| | copper pyrithione | 3 | 3 | 3 | 3 | 3 | 3 | 3 | 3 | 3 | 3 | 3 | 3 |
| Release modifier | hydrogenated rosin zinc salt solution | 3 | 3 | 3 | 3 | 3 | 3 | 3 | 3 | 3 | 3 | 3 | 3 |
| | gum rosin zinc salt solution | 3 | 3 | 3 | 3 | 3 | 3 | 3 | 3 | 3 | 3 | 3 | 3 |
| Pigment | red iron oxide | 2 | 2 | 2 | 2 | 2 | 2 | 2 | 2 | 2 | 2 | 2 | 2 |
| | talc | 2 | 2 | 2 | 2 | 2 | 2 | 2 | 2 | 2 | 2 | 2 | 2 |
| | zinc oxide | 4 | 4 | 4 | 4 | 4 | 4 | 4 | 4 | 4 | 4 | 4 | 4 |
| | titanium oxide | 1 | 1 | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 | 3 | 3 |
| | tetraethoxysilane | 0.5 | 0.5 | 0.5 | 0.5 | 0.5 | 0.5 | 0.5 | 0.5 | 0.5 | 0.5 | 0.5 | 0.5 |
| | ESBO | 2 | 2 | 2 | 2 | 2 | 2 | 2 | 2 | 2 | 2 | 2 | 2 |
| Solvent | xylene | 3.5 | 3.5 | 3.5 | 3.5 | 3.5 | 3.5 | 3.5 | 3.5 | 3.5 | 3.5 | 3.5 | 3.5 |
| | 1-butanot | 3 | 3 | 3 | 3 | 3 | 3 | 3 | 3 | 3 | 3 | 3 | 3 |
| Total | | 100 | 100 | 100 | 100 | 100 | 100 | 100 | 100 | 100 | 100 | 100 | 100 |
| Test Example 1 Rotary Test | coating film condition after 12 months | AA | AA | AA | AA | AA | AA | AA | AA | AA | AA | AA | AA |
| | coating film condition after 24 months | AA | AA | AA | AA | AA | AA | AA | AA | AA | AA | AA | AA |
| Test Example 2 Antifouling Test | after 18 months | AA | AA | AA | AA | AA | AA | AA | AA | AA | AA | AA | AA |
| | after 36 months | A | A | AA | AA | AA | AA | A | AA | AA | AA | AA | AA |

**[Table 7]**

| Table 7 | | Example | | | | | | | | | | |
|---|---|---|---|---|---|---|---|---|---|---|---|---|
| | | 24 | 25 | 26 | 27 | 28 | 29 | 30 | 31 | 32 | 33 | 34 |
| Copolymer A | copolymer solution A-1 | 20 | 20 | 20 | 20 | 20 | 20 | 20 | 20 | 20 | 20 | 20 |
| Polyester C | TP-217 | 5 | | | | | | | | | | |
| | TP-290 | | 5 | | | | | | | | | |
| | X-2420 | | | 5 | | | | | | | | |
| | GK-680 | | | | 5 | | | | | | | |
| | PGA | | | | | 5 | | | | | | |
| | PHB | | | | | | 5 | | | | | |
| | PDO-PGLA | | | | | | | 5 | | | | |
| | PHBV | | | | | | | | 5 | | | |
| | Poly CPH | | | | | | | | | 5 | | |
| | PEG-PDLLA | | | | | | | | | | 5 | |
| | PEG-PCL | | | | | | | | | | | 5 |
| Antifouling agent D | cuprous oxide | 45 | 45 | 45 | 45 | 45 | 45 | 45 | 45 | 45 | 45 | 45 |
| | copper pyrithione | 3 | 3 | 3 | 3 | 3 | 3 | 3 | 3 | 3 | 3 | 3 |
| Release modifier | hydrogenated rosin zinc salt solution | 3 | 3 | 3 | 3 | 3 | 3 | 3 | 3 | 3 | 3 | 3 |
| | gum rosin zinc salt solution | 3 | 3 | 3 | 3 | 3 | 3 | 3 | 3 | 3 | 3 | 3 |
| Pigment | red iron oxide | 2 | 2 | 2 | 2 | 2 | 2 | 2 | 2 | 2 | 2 | 2 |
| | talc | 2 | 2 | 2 | 2 | 2 | 2 | 2 | 2 | 2 | 2 | 2 |
| | zinc oxide | 4 | 4 | 4 | 4 | 4 | 4 | 4 | 4 | 4 | 4 | 4 |
| | titanium oxide | 1 | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 | 3 |
| | tetraethoxysilane | 0.5 | 0.5 | 0.5 | 0.5 | 0.5 | 0.5 | 0.5 | 0.5 | 0.5 | 0.5 | 0.5 |
| | ESBO | 2 | 2 | 2 | 2 | 2 | 2 | 2 | 2 | 2 | 2 | 2 |
| Solvent | xylene | 3.5 | 3.5 | 3.5 | 3.5 | 3.5 | 3.5 | 3.5 | 3.5 | 3.5 | 3.5 | 3.5 |
| | 1-butanot | 3 | 3 | 3 | 3 | 3 | 3 | 3 | 3 | 3 | 3 | 3 |
| Total | | 100 | 100 | 100 | 100 | 100 | 100 | 100 | 100 | 100 | 100 | 100 |
| Test Example 1 Rotary Test | coating film condition after 12 months | AA | AA | AA | AA | A | AA | AA | AA | AA | AA | AA |
| | coating film condition after 24 months | A | AA | A | AA | A | AA | AA | AA | AA | AA | A |
| Test Example 2 Antifouling Test | after 18 months | AA | AA | AA | AA | AA | AA | AA | AA | AA | AA | AA |
| | after 36 months | AA | AA | AA | AA | A | AA | AA | AA | AA | AA | AA |

**Table 8**

| Table 8 | | Example | | | | | | | | | |
|---|---|---|---|---|---|---|---|---|---|---|---|
| | | 35 | 36 | 37 | 38 | | 40 | 41 | 42 | 43 | 44 |
| Copolymer A | copolymer solution A-1 | 20 | 20 | 20 | 20 | 20 | 20 | 20 | 20 | 20 | 20 |
| Polyester C | PCL-PGA | 5 | | | | | | | | | |
| | Polymeg | | 5 | | | | | | | | |
| | PEEU | | | 5 | | | | | | | |
| | R 202 S | | | | 5 | | | | | | |
| | R 203 H | | | | | 5 | | | | | |
| | RG 502 | | | | | | 5 | | | | |
| | RG 653 H | | | | | | | 5 | | | |
| | L 206 S | | | | | | | | 5 | | |
| | C 209 | | | | | | | | | 5 | |
| | X 206 S | | | | | | | | | | 5 |
| Antifouling agent D | cuprous oxide | 45 | 45 | 45 | 45 | 45 | 45 | 45 | 45 | 45 | 45 |
| | copper pyrithione | 3 | 3 | 3 | 3 | 3 | 3 | 3 | 3 | 3 | 3 |
| Release modifier | hydrogenated rosin zinc salt solution | 3 | 3 | 3 | 3 | 3 | 3 | 3 | 3 | 3 | 3 |
| | gum rosin zinc salt solution | 3 | 3 | 3 | 3 | 3 | 3 | 3 | 3 | 3 | 3 |
| Pigment | red iron oxide | 2 | 2 | 2 | 2 | 2 | 2 | 2 | 2 | 2 | 2 |
| | talc | 2 | 2 | 2 | 2 | 2 | 2 | 2 | 2 | 2 | 2 |
| | zinc oxide | 4 | 4 | 4 | 4 | 4 | 4 | 4 | 4 | 4 | 4 |
| | titanium oxide | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 |
| | tetraethoxysilane | 0.5 | 0.5 | 0.5 | 0.5 | 0.5 | 0.5 | 0.5 | 0.5 | 0.5 | 0.5 |
| | ESBO | 2 | 2 | 2 | 2 | 2 | 2 | 2 | 2 | 2 | 2 |
| Solvent | xylene | 3.5 | 3.5 | 3.5 | 3.5 | 3.5 | 3.5 | 3.5 | 3.5 | 3.5 | 3.5 |
| | 1-butanol | 3 | 3 | 3 | 3 | 3 | 3 | 3 | 3 | 3 | 3 |
| Total | | 100 | 100 | 100 | 100 | 100 | 100 | 100 | 100 | 100 | 100 |
| Test Example 1 Rotary Test | coating film condition after 12 months | AA | AA | AA | AA | AA | AA | AA | AA | AA | AA |
| | coating film condition after 24 months | AA | AA | A | AA | A | AA | A | AA | AA | AA |
| Test Example 2 Antifouling Test | after 18 months | AA | AA | AA | AA | AA | AA | AA | AA | AA | AA |
| | after 36 months | AA | AA | AA | AA | A | AA | A | AA | AA | AA |

**[Table 9]**

| Table 9 | | Example | | | | | | | | | | | |
|---|---|---|---|---|---|---|---|---|---|---|---|---|---|
| | | 45 | 46 | 47 | 48 | 49 | | 51 | 52 | 53 | 54 | 55 | 56 |
| Copolymer A | copolymer solution A-2 | 20 | 20 | 20 | | | | | | | | | |
| | copolymer solution A-3 | | | | 20 | 20 | 20 | | | | | | |
| | copolymer solution A-4 | | | | | | | 20 | 20 | 20 | | | |
| | copolymer solution A-5 | | | | | | | | | | 20 | 20 | 20 |
| Polyester C | C-1 | 5 | | | | | | | | | 5 | | |
| | C-7 | | | | 5 | | | | | | | 5 | |
| | C-8 | | 5 | | | | | 5 | | | | | |
| | C-13 | | | | | 5 | | | 5 | | | | |
| | C-19 | | | 5 | | | 5 | | | | | | |
| | C-21 | | | | | | | | | 5 | | | 5 |
| Antifouling agent D | cuprous oxide | 45 | 45 | 45 | 45 | 45 | 45 | 45 | 45 | 45 | 45 | 45 | 45 |
| | copper pyrithione | 3 | 3 | 3 | 3 | 3 | 3 | 3 | 3 | 3 | 3 | 3 | 3 |
| Release modifier | hydrogenated rosin zinc salt solution | 3 | 3 | 3 | 3 | 3 | 3 | 3 | 3 | 3 | 3 | 3 | 3 |
| | gum rosin zinc salt solution | 3 | 3 | 3 | 3 | 3 | 3 | 3 | 3 | 3 | 3 | 3 | 3 |
| Pigment | red iron oxide | 2 | 2 | 2 | 2 | 2 | 2 | 2 | 2 | 2 | 2 | 2 | 2 |
| | talc | 2 | 2 | 2 | 2 | 2 | 2 | 2 | 2 | 2 | 2 | 2 | 2 |
| | zinc oxide | 4 | 4 | 4 | 4 | 4 | 4 | 4 | 4 | 4 | 4 | 4 | 4 |
| | titanium oxide | 1 | 1 | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 | 3 | 3 |
| | tetraethoxysilane | 0.5 | 0.5 | 0.5 | 0.5 | 0.5 | 0.5 | 0.5 | 0.5 | 0.5 | 0.5 | 0.5 | 0.5 |
| | ESBO | 2 | 2 | 2 | 2 | 2 | 2 | 2 | 2 | 2 | 2 | 2 | 2 |
| Solvent | xylene | 3.5 | 3.5 | 3.5 | 3.5 | 3.5 | 3.5 | 3.5 | 3.5 | 3.5 | 3.5 | 3.5 | 3.5 |
| | 1-butanol | 3 | 3 | 3 | 3 | 3 | 3 | 3 | 3 | 3 | 3 | 3 | 3 |
| Total | | 100 | 100 | 100 | 100 | 100 | 100 | 100 | 100 | 100 | 100 | 100 | 100 |
| Test Example 1 Rotary Test | coating film condition after 12 months | AA | AA | AA | AA | AA | AA | AA | AA | AA | A | A | A |
| | coating film condition after 24 months | A | A | A | AA | AA | AA | AA | AA | A | A | A | A |
| Test Example 2 Antifouling Test | after 18 months | AA | AA | AA | AA | AA | AA | AA | AA | AA | AA | AA | AA |
| | after 36 months | AA | A | A | AA | AA | AA | AA | AA | AA | A | A | A |

**[Table 10]**

| Table 10 | | Example | | | | |
|---|---|---|---|---|---|---|
| | | 57 | 58 | 59 | 60 | 61 |
| Copolymer A | copolymer solution A-1 | 3 | | 2 | | 7 |
| | copolymer solution A-3 | 4 | 3 | 10 | 5 | 14 |
| | copolymer solution A-5 | 3 | 3 | 8 | 5 | 2 |
| Polyester C | C-4 | 3 | 3 | 1 | | |
| | C-8 | | | | 3 | |
| | C-14 | 3 | 2 | | 2 | 1 |
| | C-18 | | 2 | 2 | 4 | |
| | C-21 | 3 | 2 | 2 | | 1 |
| | C-23 | 1 | 1 | | 1 | |
| Antifouling agent D | cuprous oxide | 45 | 45 | 45 | 35 | 35 |
| | copper pyrithione | 3 | 3 | 3 | 2 | 1 |
| | Sea Nine | | | | | 1 |
| | Zineb | | | | | 1 |
| | ECONEA 028 | | | | | 1 |
| | medetomidine | | | | | 1 |
| Release modifier | gum rosin solution | | 2 | 2 | 3 | 2 |
| | hydrogenated rosin solution | | 3 | 2 | 2 | 2 |
| | gum rosin zinc salt solution | 3 | | 2 | 2 | 2 |
| | hydrogenated rosin zinc salt solution | 3 | 2 | | | 1 |
| | trimethyl isobutenyl cyclohexene carboxylic acid solution | | | | 1 | 1 |
| Pigment | red iron oxide | 2 | 2 | 2 | 2 | 2 |
| | talc | 2 | 2 | 2 | 2 | 2 |
| | zinc oxide | 4 | 4 | 4 | 7 | 7 |
| | titanium oxide | 1 | 1 | 1 | 1 | 1 |
| Other additives | Disparlon A603-20X | 3 | 3 | 3 | 3 | 3 |
| | tetraethoxysilane | 0.5 | 1 | 1 | 1 | 1 |
| | TCP | | | 0.5 | | 1 |
| | ESBO | 0.5 | | 0.5 | 1 | |
| | E-9000H | | 0.5 | | | |
| | DAIFATTY-101 | 1 | 0.5 | 1 | 1 | |
| | GP-2001 | 0.5 | 0.5 | | | 1 |
| | GP-4001 | | 0.5 | | | |
| Solvent | xylene | 6.5 | 10 | 4 | 10 | 6 |
| | 1-butanol | 5 | 4 | 2 | 7 | 3 |
| Total | | 100 | 100 | 100 | 100 | 100 |
| Test Example 1 Rotary Test | coating film condition after 12 months | AA | AA | AA | AA | AA |
| | coating film condition after 24 months | AA | AA | AA | AA | AA |
| Test Example 2 Antifouling Test | after 18 months | AA | AA | AA | AA | AA |
| | after 36 months | AA | AA | AA | A | AA |

**[Table 11]**

| Table 11 | | Example | | | | |
|---|---|---|---|---|---|---|
| | | 62 | 63 | 64 | 65 | 66 |
| Copolymer A | copolymer solution A-1 | 5 | 6 | 10 | 9 | 8 |
| | copolymer solution A-3 | 5 | 12 | 16 | 12 | 10 |
| | copolymer solution A-5 | 5 | | | | |
| Polyester C | C-4 | | 1 | | 3 | |
| | C-6 | | 1 | | | 3 |
| | C-8 | 5 | | | 2 | |
| | C-14 | 3 | 2 | 1 | | 4 |
| | C-18 | | 2 | | 3 | 3 |
| | C-21 | 1 | | 0.5 | 1 | 2 |
| | C-23 | 1 | | | 1 | 1 |
| Antifouling agent D | cuprous oxide | 25 | 20 | 20 | | |
| | copper pyrithione | 1.5 | 1.5 | 1.5 | | 1 |
| | Sea Nine | 1.5 | 1.5 | 1.5 | | 1 |
| | Zineb | | | | | 1 |
| | zinc pyrithione | | | | 5 | 4 |
| | ECONEA 028 | | 1.5 | | 7 | 4 |
| | medetomidine | | | 1.5 | | 1 |
| Release modifier | rosin solution | 5 | 3 | | | |
| | hydrogenated rosin solution | 5 | 3 | | | |
| | gum rosin zinc salt solution | 3 | 3 | 3 | 5 | 3 |
| | hydrogenated rosin zinc salt solution | | 3 | 5 | 5 | 4 |
| | trimethyl isobutenyl cyclohexene carboxylic acid solution | 2 | 2 | 3 | | 3 |
| Pigment | red iron oxide | 2 | 3 | 3 | 8 | 8 |
| | talc | 3 | 2 | 2 | 5 | 5 |
| | zinc oxide | 7 | 7 | 7 | 20 | 20 |
| | titanium oxide | 1 | 1 | 1 | 1 | 1 |
| Other additives | Disparlon A603-20X | 3 | 3 | 3 | 3 | 3 |
| | tetraethoxysilane | 1 | 1 | 0.5 | 0.5 | 0.5 |
| | TCP | 1 | | | 1 | |
| | ESBO | 1 | 1 | | 1 | |
| | E-9000H | | 1 | 1 | | 1 |
| | DAIFATTY-101 | | | 1 | 1 | 1 |
| | GP-2001 | 1 | | | | 1 |
| | GP-4001 | | 1 | 1 | | |
| Solvent | xylene | 7 | 10 | 10.5 | 3.5 | 3.5 |
| | 1-butanol | 5 | 7 | 7 | 3 | 3 |
| Total | | 100 | 100 | 100 | 100 | 100 |
| Test Example 1 Rotary Test | coating film condition after 12 months | AA | AA | AA | AA | AA |
| | coating film condition after 24 months | AA | AA | AA | A | A |
| Test Example 2 Antifouling Test | after 18 months | AA | AA | AA | A | AA |
| | after 36 months | A | AA | AA | A | A |

**[Table 12]**

| Table 12 | | Example | | | | |
|---|---|---|---|---|---|---|
| | | 67 | 68 | 69 | 70 | 71 |
| Copolymer A | copolymer solution A-3 | | 17 | | | |
| | copolymer solution A-4 | 20 | | 17 | 12 | 12 |
| Polyester C | C-4 | 3 | | | 3 | |
| | C-6 | | 2 | 3 | | 3 |
| | C-8 | | 3 | | 2 | 2 |
| | C-14 | 3 | | 3 | | |
| | C-18 | | | | 3 | 3 |
| | C-21 | | 3 | | | 2 |
| | C-23 | | | 2 | 2 | |
| Antifouling agent D | cuprous oxide | 43 | 35 | 35 | 30 | 30 |
| | Diuron | 1 | | | | |
| | copper pyrithione | | 5 | 5 | 1 | |
| | Sea Nine | 1 | 0.5 | 0.5 | | |
| | Zineb | | 2 | 2 | | |
| | medetomidine | 0.1 | 0.1 | 0.1 | 0.1 | 0.2 |
| Release modifier | rosin solution | 1 | 1 | 1 | 1 | 1 |
| | hydrogenated rosin solution | 2 | 2 | 2 | 4 | 4 |
| | gum rosin zinc salt solution | 1 | 2 | 2 | 5 | 5 |
| | hydrogenated rosin zinc salt solution | 2 | 2 | 2 | 4 | 4 |
| | trimethyl isobutenyl cyclohexene carboxylic acid solution | 1 | 1 | 1 | 1 | 1 |
| Pigment | red iron oxide | 2 | 3 | 3 | 3 | 3 |
| | talc | 2 | 3 | 3 | 3 | 3 |
| | zinc oxide | 4 | 5 | 5 | 12 | 12 |
| | titanium oxide | 1 | 1 | 1 | 1 | 1 |
| Other additives | Disparlon A603-20X | 3 | 3 | 3 | 3 | 3 |
| | tetraethoxysilane | 0.5 | 0.5 | 0.5 | 0.5 | 0.5 |
| | TCP | 1 | 1 | 1 | 1 | 1 |
| | ESBO | 0.5 | 0.5 | 0.5 | 0.5 | 0.5 |
| | E-9000H | 0.5 | | 0.5 | | |
| | DAIFATTY-101 | 0.5 | | | 0.5 | |
| | GP-2001 | | 0.5 | | | |
| | GP-4001 | | | | | 0.5 |
| Solvent | xylene | 3.9 | 3.9 | 3.9 | 4.4 | 5.3 |
| | 1-butanol | 2 | 2 | 2 | 2 | 2 |
| | denatured alcohol | 1 | 1 | 1 | 1 | 1 |
| Total | | 100 | 100 | 100 | 100 | 100 |
| Test Example 1 Rotary Test | coating film condition after 12 months | AA | AA | AA | AA | AA |
| | coating film condition after 24 months | AA | A | AA | A | A |
| Test Example 2 Antifouling Test | after 18 months | AA | AA | AA | AA | AA |
| | after 36 months | AA | AA | AA | AA | AA |

**[Table 13]**

| Table 13 | | Example | | | | |
|---|---|---|---|---|---|---|
| | | 72 | 73 | 74 | 75 | 76 |
| Copolymer A | copolymer solution A-4 | 12 | 12 | 12 | 12 | 12 |
| Polyester C | C-4 | 2 | | | 2 | |
| | C-6 | | | 3 | | |
| | C-8 | 3 | | | | 2 |
| | C-14 | | | 3 | | |
| | C-18 | 3 | 3 | | | 2 |
| | C-21 | 2 | 2 | | | 2 |
| | C-23 | | | | 3 | |
| Antifouling agent D | copper rhodanide | 35 | | | | |
| | copper pyrithione | | 7 | 5 | | |
| | Sea Nine | 1 | | | 2 | |
| | zinc pyrithione | 2 | | | 7 | 7 |
| | ECONEA 028 | 1 | | 2 | | 1 |
| | medetomidine | | 0.2 | 0.1 | 0.1 | 0.1 |
| Release modifier | rosin solution | 1 | 1 | 1 | 1 | 1 |
| | hydrogenated rosin solution | 2 | 9 | 9 | 9 | 9 |
| | gum rosin zinc salt solution | 2 | 7 | 7 | 7 | 7 |
| | hydrogenated rosin zinc salt solution | 2 | 9 | 9 | 9 | 9 |
| | trimethyl isobutenyl cyclohexene carboxylic acid solution | 1 | 1 | 1 | 1 | 1 |
| Pigment | red iron oxide | 3 | 8 | 8 | 8 | 8 |
| | talc | 3 | 5 | 5 | 5 | 5 |
| | zinc oxide | 12 | 20 | 20 | 20 | 20 |
| | titanium oxide | 1 | 2 | 2 | 1 | 1 |
| Other additives | Disparlon A603-20X | 3 | 3 | 3 | 3 | 3 |
| | tetraethoxysilane | 0.5 | 0.5 | 0.5 | 0.5 | 0.5 |
| | TCP | 1 | 1 | 1 | 1 | 1 |
| | ESBO | 0.5 | 0.5 | 0.5 | 0.5 | 0.5 |
| | E-9000H | | | 0.5 | | |
| | DAIFATTY-101 | | | | 0.5 | |
| | GP-2001 | 0.5 | | | | |
| | GP-4001 | | 0.5 | | | 0.5 |
| Solvent | xylene | 3.5 | 5.3 | 4.4 | 4.4 | 4.4 |
| | 1-butanol | 2 | 2 | 2 | 2 | 2 |
| | denatured alcohol | 1 | 1 | 1 | 1 | 1 |
| Total | | 100 | 100 | 100 | 100 | 100 |
| Test Example 1 Rotary Test | coating film condition after 12 months | AA | AA | AA | AA | AA |
| | coating film condition after 24 months | AA | A | A | A | A |
| Test Example 2 Antifouling Test | after 18 months | AA | AA | AA | AA | AA |
| | after 36 months | A | A | A | A | A |

**[Table 14]**

| Table 14 | | Comparative Example | | | | | | |
|---|---|---|---|---|---|---|---|---|
| | | 1 | 2 | 3 | 4 | 5 | 6 | 7 |
| Copolymer A | copolymer solution A-1 | 30 | | | | | | |
| Other copolymers | copolymer solution B-1 | | | | | 20 | 20 | 20 |
| Polyester C | C-1 | | 15 | | | 5 | | |
| | C-13 | | | 15 | | | 5 | |
| | C-19 | | | | 15 | | | 5 |
| Antifouling agent D | cuprous oxide | 45 | 45 | 45 | 45 | 45 | 45 | 45 |
| | copper pyrithione | 3 | 3 | 3 | 3 | 3 | 3 | 3 |
| Release modifier | hydrogenated rosin zinc salt solution | 3 | 3 | 3 | 3 | 3 | 3 | 3 |
| | gum rosin zinc salt solution | 3 | 3 | 3 | 3 | 3 | 3 | 3 |
| Pigment | red iron oxide | 2 | 2 | 2 | 2 | 2 | 2 | 2 |
| | talc | 2 | 2 | 2 | 2 | 2 | 2 | 2 |
| | zinc oxide | 4 | 4 | 4 | 4 | 4 | 4 | 4 |
| | titanium oxide | 1 | 1 | 1 | 1 | 1 | 1 | 1 |
| Other additives | Disparlon A603-20X | 3 | 3 | 3 | 3 | 3 | 3 | 3 |
| | tetraethoxysilane | 0.5 | 0.5 | 0.5 | 0.5 | 0.5 | 0.5 | 0.5 |
| | ESBO | 2 | 2 | 2 | 2 | 2 | 2 | 2 |
| Solvent | xylene | 0.5 | 8.5 | 8.5 | 8.5 | 3.5 | 3.5 | 3.5 |
| | 1-butanot | 0.5 | 8 | 8 | 8 | 3 | 3 | 3 |
| Total | | 100 | 100 | 100 | 100 | 100 | 100 | 100 |
| Test Example 1 Rotary Test | coating film condition after 12 months | B | B | B | C | B | C | C |
| | coating film condition after 24 months | C | C | C | D | C | D | E |
| Test Example 2 Antifouling Test | after 18 months | A | B | B | B | C | C | B |
| | after 36 months | C | D | C | C | F | F | F |

The details of the components in the table are as follows.

### <Commercially Available Polyester Resin C>

**[Table 15]**

| Table 15 | | |
|---|---|---|
| Abbreviation | Product name | Manufacturer/sales company |
| TP-217 | Nichigo POLYESTER TP-217 | Nippon Synthetic Chemical Industry Co. Ltd. |
| TP-290 | Nichigo POLYESTER TP-290 | Nippon Synthetic Chemical Industry Co. Ltd. |
| X-2420 | Polylite OD-X-2420 | DIC Corporation |
| GK-680 | Vylon GK-680 | Toyobo Co., Ltd. |
| PGA | Polyglycolide inherent viscosity 1.4dL/g | Sigma-Aldrich Co. LLC. |
| PHB | Poly[(R)-3-hydroxybutyric acid] natural origin | Sigma-Aldrich Co. LLC. |
| PDO-PGLA | Poly(p-dioxanone-co-glycohde-co-lactide | Sigma-Aldrich Co. LLC. |
| PHBV | Poly(3-hydroxybutyric acid-co-3-hydroxyvaleric acid) natural origin, PHV content 8 mol% | Sigma-Aldrich Co. LLC. |
| Poly CPH | Poly[1,6-bis(p-carboxyphenoxy)hexane] | Sigma-Aldrich Co. LLC. |
| PEG-PDLLA | Poly(ethylene glycol) methyl ether-block-poly(D,L lactide) | Sigma-Aldrich Co. LLC. |
| PEG-PCL | Poly(ethylene glycol)-block-poly(ε-caprolactone) methyl ether | Sigma-Aldrich Co. LLC. |
| PCL-PGA | Poly(caprolactone-co-glycolide) | Sigma-Aldrich Co. LLC. |
| Polymeg | Polycaprolactone-block-polytetrahydrofuran -block-polycaprolactone | Sigma-Aldrich Co. LLC. |
| PEEU | Poly(D,L-lactide-co-glycolide)-block-poly(ethylene glycol) -block-poly(DL-lactidc-co-glycolide) based poly(ether ester urethane) | Sigma-Aldrich Co. LLC. |
| R 202 S | RESOMER R 202 S | Evonik Röhm GmbH |
| R 203 H | RESOMER R 203 H | Evonik Röhm GmbH |
| RG 502 | RESOMER RG 502 | Evonik Röhm GmbH |
| RG 653 H | RESOMER RG 653 H | Evonik Röhm GmbH |
| L 206 S | RESOMER L 206 S | Evonik Röhm GmbH |
| C 209 | Resomer C 209 | Evonik Röhm GmbH |
| X 206 S | RESOMER X 206 S | Evonik Röhm GmbH |

### <Antifouling Agent D>

Cuprous oxide: product name "NC-301" (manufactured by Nissin Chemco Ltd.)
Copper pyrithione: product name "Copper Omadine" (manufactured by Lonza Group AG)
Sea Nine: product name "SEA-NINE 211", 4,5-dichloro-2-octyl-4-isothiazolin-3-one (manufactured by Rohm & Haas), active ingredient 30% xylene solution
Zineb: [ethylenebis(dithiocarbamate)] zinc (manufactured by Ouchi Shinko Chemical Industrial Co., Ltd.)
Zinc pyrithione: (manufactured by Lonza Group AG)
Econea 028: product name "Econea 028" 2-(p-chlorophenyl)-3-cyano-4-bromo-5-trifluoromethylpyrrole (manufactured by Janssen PMP)
Medetomidine: (±)-4-[1-(2,3-dimethylphenyl)ethyl]-1H-imidazole (manufactured by Wako Pure Chemical Industries, Ltd.)
Copper rhodanide: copper thiocyanate (manufactured by Nippon Kagaku Sangyo Co., Ltd.)
Diuron: product name "Diuron" (manufactured by Tokyo Chemical Industry Co., Ltd.)

### <Release Modifier>

Gum rosin solution: solution produced in Production Example D1 was used.

Hydrogenated rosin solution: solution produced in Production Example D2 was used.

Gum rosin zinc salt solution: solution produced in Production Example D3 was used.

Hydrogenated rosin zinc salt solution: solution produced in Production Example D4 was used.

Trimethylisobutenylcyclohexenecarboxylic acid solution: solution produced in Production Example D5 was used.

### <Pigment>

Red iron oxide: product name "BENGARA KINGYOKU" (manufactured by Morishita Red iron oxide Kogyo Co., Ltd.)
Talc: product name "Talc MS" (manufactured by Nippon Talc Co., Ltd.)
Zinc oxide: product name "Zinc Oxide (Type II)" (manufactured by Seido Chemical Industry Co., Ltd.)
Titanium oxide: product name "FR-41" (manufactured by Furukawa Co., Ltd.)

### <Other Additives>

Disparlon A603-20X: amide thixotropic agent, product name "Disparlon A603-20X" (manufactured by Kusumoto Chemicals, Ltd.)
Tetraethoxysilane: product name "Ethyl Silicate 28" (manufactured by Colcoat Co., Ltd.)
ESBO: epoxidized soybean oil: product name "SANSOCIZER E-2000H" (manufactured by New Japan Chemical Co., Ltd.)
E-9000H: epoxidized linseed oil: product name "SANSOCIZER E-9000H" (manufactured by New Japan Chemical Co., Ltd.)
DAIFATTY-101: mixed dibasic acid ester (manufactured by Daihachi Chemical Industry Co., Ltd.)
GP-2001: plasticizer made mainly from rosin: product name "Lactcizer GP-2001" GP-4001 GP-2001" (manufactured by Arakawa Chemical Industries, Ltd.)
GP-4001: plasticizer made mainly from lactic acid: product name "Lactcizer GP-4001" (manufactured by Arakawa Chemical Industries, Ltd.)
TCP: tricresyl phosphate (manufactured by Daihachi Chemical Industry Co., Ltd.)
Denatured alcohol: product name "Clean Ace High" (manufactured by IMAZU CHEMICAL Co.,Ltd.)

### 3. Test

The coating compositions of Examples and Comparative Examples were subjected to the following tests. The evaluation results are shown in Tables 5 to 14.

All Comparative Examples did not show good results in at least one of the rotary test and the antifouling test, compared to Examples.

### <Test Example 1 (Rotary Test)>

A water tank was provided with, in the center thereof, a rotary drum having a diameter of 515 mm and a height of 440 mm, which was configured to be rotatable by a motor. The tank was also provided with a cooling apparatus for keeping the seawater temperature constant, and an automatic pH controller for keeping the seawater pH constant.

Test plates were prepared in accordance with the following method.

First, an anti-corrosion coating material (an epoxy vinyl A/C) was applied onto a titanium plate (71 × 100 × 0.5 mm) such that the thickness after drying was about 100 µm, and dried to form an anti-corrosion coating film. Thereafter, each of the coating compositions obtained in Examples and Comparative Examples was applied thereon such that the dry film thickness was about 300 µm, and dried at 40°C for 3 days to prepare a test plate.

The test plate thus prepared was fixed to the rotary drum of the rotating apparatus of the above equipment so as to be in contact with seawater, and the rotary drum was rotated at a speed of 20 knots. During the test, the temperature and the pH of the seawater were maintained at 25°C and at 8.0 to 8.2, respectively, and the seawater was replaced every two weeks.

After 12 months and 24 months from the start of the test on each test plate, the surface of each coating film was observed with naked eyes and a microscope to evaluate the surface condition of the coating film.

Evaluation of the coating film surface condition was made in accordance with the following criteria.
AA: No defects observed
A: Hairline cracks observed in less than 10% of the total surface area of the coating film
B: Hairline cracks observed in 10 to 30% of the total surface area of the coating film
C: Hairline cracks observed in 30% or more of the total surface area of the coating film
D: Cracks observed in 30% or more of the total surface area of the coating film
E: Coating film defects such as large cracks, blisters, or peel-offs (only the surface or a part of the edge of the coating film peels off), delamination (the entire coating film peels off, and no test coating film remains) observed

### <Test Example 2 (Antifouling Test)>

Each of the coating compositions obtained in Examples and Comparative Examples was applied onto both sides of a PVC plate (100 × 200 × 2 mm) such that the thickness of the dry coating film was about 300 µm. The resulting coated product was dried at room temperature (25°C) for 3 days to prepare a test plate with a dry coating film having a thickness of about 300 µm. The test plate was immersed 1.5 m below sea level in Owase City, Mie Prefecture, Japan, and fouling of the test plate by adhered materials was observed after 18 months and 36 months.

Evaluation was made in accordance with the following criteria by visual observation of the surface condition of the coating films.
AA: No fouling organisms such as shellfish and algae adhered, and almost no slime
A: No fouling organisms such as shellfish and algae adhered, and slime thinly adhered (to the extent that the coating film surface was visible) but removable by lightly wiping with a brush
B: No fouling organisms such as shellfish and algae adhered, and slime adhered thickly to the extent that the coating film surface was not visible and not removable even by strong wiping with a brush
C: Fouling organisms such as shellfish and algae adhered to less than half of the total surface area of the test coating film surface
D: Fouling organisms such as shellfish and algae adhered to half or more of the total surface area of the test coating film surface
F: Applied test coating film (antifouling coating film) peeled off, making the test impossible to continue

## Claims

1. An antifouling coating composition comprising:
a copolymer A;
a polyester resin C; and
an antifouling agent D,
wherein the copolymer A is a copolymer of a monomer (a) represented by general formula (1) and an ethylenically unsaturated monomer (b) other than the monomer (a), and the monomer (a) comprises a compound represented by general formula (1) in which n is 2 or more, and 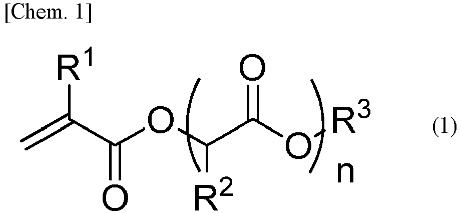
wherein R¹ represents hydrogen or a methyl group, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 1 to 10.

2. The antifouling coating composition of Claim 1, wherein the copolymer A comprises a monomer (b1) represented by general formula (2) as the monomer (b).
